# FASCICULE DE BREVET EUROPEEN

(11) **EP 3 794 301 B1**
(45) Date de publication et mention de la délivrance du brevet: **23.02.2022**
(21) Numéro de dépôt: 19753134.6
(22) Date de dépôt: 01.07.2019
(51) Int. Cl.: F28F 9/02, F28D 1/04, F01P 11/02, F16L 55/07

(54) **BOUCHON POUR UNE BOITE COLLECTRICE**
KAPPE FÜR EINEN SAMMELKASTEN
CAP FOR A HEADER BOX

(30) Priorité: 29.06.2018 FR 1855925
(43) Date de publication de la demande: 24.03.2021
(73) Titulaire: Valeo Systemes Thermiques-THS, 78322 Le Mesnil Saint Denis Cedex (FR)
(72) Inventeur: PILLER, Garry, 51721 REIMS (FR); POTTEAU, Stéphane, 51721 REIMS (FR); GARCIA, Jean-Jacques, 51721 REIMS (FR); LECLEIRE, Damien, 51721 REIMS (FR)
(74) Mandataire: Valeo Systèmes Thermiques
(86) Numéro de dépôt international: PCT/FR2019/051621
(87) Numéro de publication internationale: WO 2020/002861

(56) Documents cités:
- KR-B1- 101 549 096
- US-A- 5 096 158
- US-A- 5 722 451
- US-A1- 2008 000 724
- US-A1- 2016 084 386

## Description

L'invention concerne notamment un bouchon pour une boite collectrice d'un échangeur de chaleur.

Un échangeur de chaleur, par exemple un radiateur de véhicule automobile, comprend en général au moins une boîte à eau, ou boite collectrice, montée à l'extrémité d'un faisceau de tubes dans lesquels circule un fluide, par exemple le liquide de refroidissement d'un moteur à combustion interne de véhicule automobile. Il est connu de former un orifice ou ouverture dans la paroi de la boite à eau et de fermer cet orifice au moyen d'un bouchon comportant une tête de manœuvre, une partie intermédiaire sur laquelle est monté un joint d'étanchéité, et une queue formée avec des nervures radiales qui constituent des rampes coopérant avec des rampes complémentaires du bord de l'orifice de la boîte à eau, pour le montage du bouchon dans l'orifice et son maintien en position de fermeture étanche de l'orifice.

Pour la purge ou la vidange de l'échangeur, le bouchon est entraîné en rotation, par exemple sur un quart de tour à partir de cette position de fermeture. Il faut ensuite le tirer vers l'extérieur, par translation le long de son axe, pour réaliser la purge ou la vidange de l'échangeur. Cette dernière manœuvre n'est pas forcément évidente pour une personne non avertie.

Le brevet FR2588367 décrit un tel bouchon.

Un tel bouchon existant présente les inconvénients suivants.

Ce bouchon est trop volumineux pour être implanté sur les nouvelles boites à eau. Les constructeurs ont tendance à demander de gagner de la place dans le compartiment moteur, d'avoir des valises de refroidissement de plus en plus compactent, ce qui veut dire des boites radiateurs de plus en plus petites en largeur.

De plus, il n'y a pas toujours la possibilité de passer la main pour mettre un bouchon vissé manuellement.

Le brevet US 2016/084386 décrit tel un bouchon. Par ailleurs, il est commun d'ajouter sur les échangeurs, notamment radiateurs, une fonction de dégazage pour permettre à l'air de s'échapper pendant le remplissage par l'eau / glycol ou autre fluide caloporteur. Actuellement, pour assurer le dégazage du radiateur, il est utilisé soit un bouchon de dégazage soit un tube de dégazage.

Ce bouchon doit être clippé à la main et il n'y a toujours un accès suffisant au compartiment du moteur pour passer la main. Ceci représente un problème.

De plus, il est obligatoire sur certaines applications, d'empêcher le bouchon de s'échapper ou de sauter lors de son ouverture pour la vidange ou le dégazage, à savoir le bouchon tout en restant ouvert et maintenu dans l'ouverture ou l'orifice.

L'invention vise à remédier à certains au moins des inconvénients ou besoins listés ci-dessus.

L'invention a ainsi pour objet un bouchon pour une boite collectrice d'un échangeur de chaleur, notamment pour véhicule automobile, notamment un radiateur, ce bouchon comportant :
- une tête,
- une queue comprenant au moins une rampe de montage, cette queue étant entre la tête et une extrémité libre du bouchon,
- une patte de retenue, notamment élastiquement déformable, agencée pour retenir le bouchon dans une ouverture de la boite collectrice dans une position intermédiaire du bouchon, position dans laquelle le bouchon laisse un passage tout en état retenu dans l'ouverture, cette patte de retenue étant formée sur la queue.

Ce bouchon comporte une rampe comportant un flanc sensiblement hélicoïdal agencé pour permettre un montage notamment par quart de tour du bouchon dans une ouverture de la boite collectrice et en ce que la rampe comporte un pion de verrouillage en rotation agencé pour coopérer avec une butée de la boite collectrice pour bloquer le bouchon en rotation lorsqu'il est dans la position intermédiaire.

Selon l'invention, cette patte de retenue permet de retenir le bouchon, ce qui est particulièrement avantageux lorsque l'environnement du véhicule qui entoure l'échangeur ne permet pas de manipuler facilement le bouchon, surtout s'il manque de la place pour passer la main.

Selon l'un des aspects de l'invention, la patte de retenue est élastiquement déformable de manière à pouvoir prendre une position de retenue et une position dégagée permettant au bouchon d'être déplacé dans l'ouverture de la boite collectrice lors de la mise en place du bouchon.

Selon l'un des aspects de l'invention, la patte de retenue est disposée plus proche de l'extrémité libre du bouchon que de la tête.

Selon l'un des aspects de l'invention, la patte de retenue est disposée dans la moitié inférieure de la queue, du côté de l'extrémité libre.

Selon l'un des aspects de l'invention, le bouchon présente un axe longitudinal, et la patte de retenue comporte un flanc de préférence incliné par rapport à cet axe longitudinal, notamment suivant un angle compris entre 30° et 60°, notamment d'environ 45°. Ce flanc présente notamment un profil hélicoïdal.

Selon l'un des aspects de l'invention, la patte comporte un rebord d'appui agencé pour venir en appui contre une butée axiale de l'ouverture de la boite collectrice.

Selon l'un des aspects de l'invention, le rebord se raccorde au flanc suivant un angle notamment compris entre 90° et 180°, notamment entre 100° et 160°.

Selon l'un des aspects de l'invention, la patte de retenue se raccorde à une base, notamment de forme en arc de cercle, de la queue.

Selon l'un des aspects de l'invention, la patte de retenue est adjacente à une rampe de la queue.

Selon l'un des aspects de l'invention, la patte de retenue est réalisée d'un seul tenant avec la queue, notamment par moulage.

Selon l'un des aspects de l'invention, la patte de retenue est unique, étant présente seulement sur un côté de la queue.

Selon l'un des aspects de l'invention, la queue comporte au moins une rampe située entre la patte de retenue et la tête lorsque le bouchon et observé de coté.

Selon l'un des aspects de l'invention, le pion de verrouillage est tourné vers l'extrémité libre du bouchon.

Selon l'un des aspects de l'invention, le bouchon comporte un joint monté sous la tête.

Selon l'un des aspects de l'invention, la queue comporte une platine de maintien agencée pour loger le joint, notamment torique, entre cette platine et la tête.

Selon l'un des aspects de l'invention, la platine de maintien et la queue sont réalisées d'un seul tenant, notamment dans une matière plastique.

Selon l'un des aspects de l'invention, la tête, la queue et la platine sont réalisées d'un seul tenant, notamment dans une matière plastique.

Selon l'un des aspects de l'invention, la tête comporte une fente agencée pour y insérer un tournevis pour faire tourner le bouchon.

Selon l'un des aspects de l'invention, la fente présente une forme allongée.

L'invention a encore pour objet un échangeur de chaleur comportant une boite collectrice pourvue d'une ouverture, et un bouchon selon l'invention, le bouchon étant monté dans l'ouverture.

Selon l'un des aspects de l'invention, l'ouverture comporte une ou plusieurs saillies radiales, l'une de saillies définissant une butée axiale pour la patte de retenue.

Selon l'un des aspects de l'invention, les saillies radiales sont au nombre de deux et sont notamment sensiblement diamétralement opposées.

Selon un exemple de réalisation de l'invention, l'échangeur de chaleur, notamment un radiateur par exemple un radiateur basse température, est muni d'une fonction de dégazage pour permettre à l'air de s'échapper pendant son remplissage par l'eau / glycol ou autre fluide caloporteur.

L'invention sera mieux comprise et d'autres détails, caractéristiques et avantages de l'invention apparaîtront à la lecture de la description suivante faite à titre d'exemple non limitatif en référence au dessin annexé dans lequel :

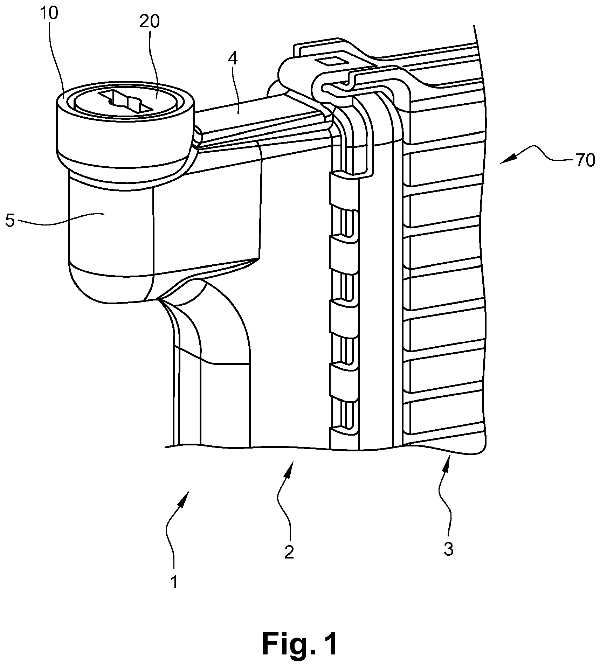

- les figures 1 à 5 illustrent, schématiquement et partiellement, suivant différentes vues, un échangeur de chaleur selon un exemple de réalisation de l'invention.

On a représenté sur la figure 1 un échangeur de chaleur 1, ici un radiateur de véhicule automobile, comportant une boîte à eau ou boite collectrice 2.

La boite 2 est montée de façon classique à l'extrémité d'un faisceau de tubes 3.

La paroi supérieure 4 est formée de moulage avec un conduit de dégazage 5 comprenant une ouverture cylindrique 10 formé adjacente avec la paroi supérieure 4.

Le bord interne de l'ouverture 10 comprend des saillies radiales 11.

La boite collectrice 2 communique fluidiquement avec les tubes du faisceau 3, de manière connue en soi.

Un bouchon 20 est prévu pour coopérer avec cette boite collectrice 2.

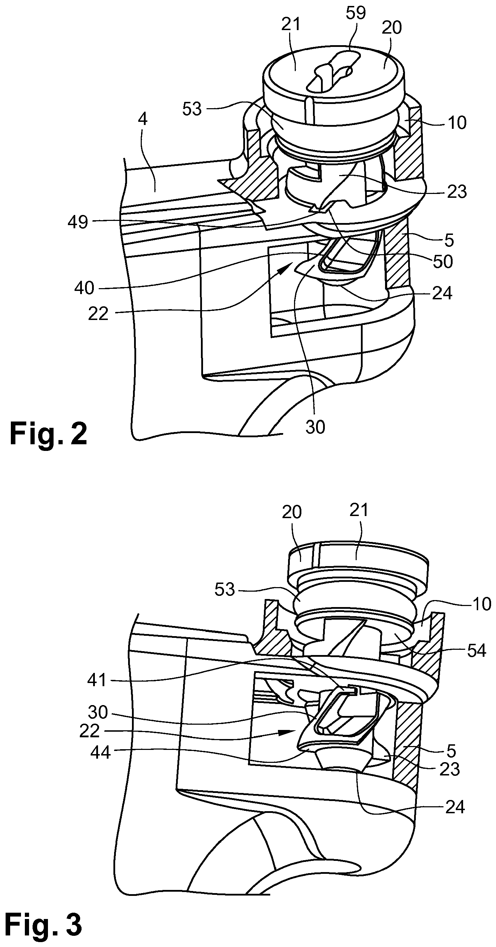

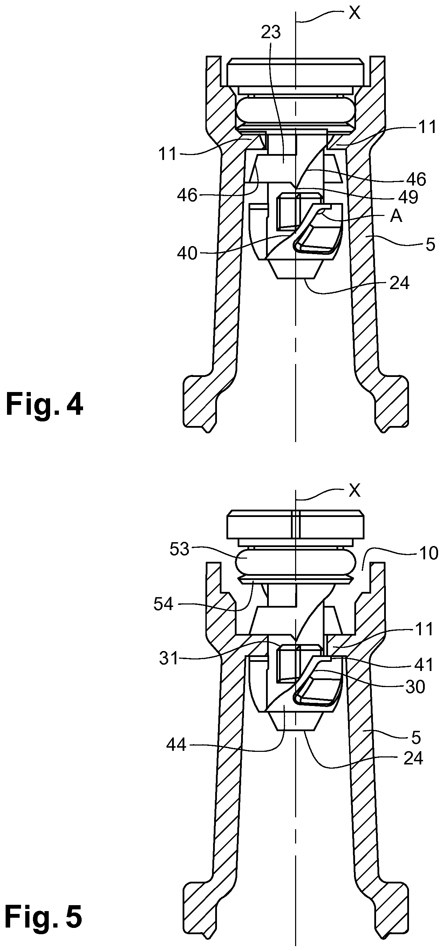

Comme illustré sur les figures 2 et 3, ce bouchon 20 comporte :
- une tête 21 de forme sensiblement cylindrique,
- une queue 22 comprenant plusieurs rampes de montage 23, cette queue 22 étant entre la tête 21 et une extrémité libre 24 du bouchon 20,
- une patte de retenue 30 agencée pour retenir le bouchon 20 dans l'ouverture 10 de la boite collectrice 2 dans une position intermédiaire du bouchon 20, position dans laquelle le bouchon 20 laisse un passage 31 tout en état retenu dans l'ouverture 10, cette patte de retenue 30 étant formée sur la queue 22, comme mieux visible sur la figure 5.

La patte de retenue 30 est élastiquement déformable, sur une faible amplitude, de manière à pouvoir prendre une position de retenue et une position dégagée permettant au bouchon 20 d'être déplacé dans l'ouverture 10 lors de la mise en place du bouchon.

La patte de retenue 30 est disposée plus proche de l'extrémité libre 24 du bouchon que de la tête 22.

La patte de retenue 30 est disposée dans la moitié inférieure de la queue, du côté de l'extrémité libre 24.

Comme illustré notamment sur les figures 4 et 5, le bouchon 20 présente un axe longitudinal X, et la patte de retenue 30 comporte un flanc 40 incliné par rapport à cet axe longitudinal X, notamment suivant un angle compris entre 30° et 60°, notamment d'environ 45°. Ce flanc 40 présente notamment un profil hélicoïdal.

La patte de retenue 30 comporte un rebord d'appui 41 agencé pour venir en appui contre une butée axiale formée par l'une des saillies radiales 11 de l'ouverture 10.

Le rebord 41 se raccorde au flanc 40 suivant un angle A notamment compris entre 90° et 180°, notamment entre 100° et 160°.

La patte de retenue 30 se raccorde à une base 44 de forme en arc de cercle, de la queue 22.

La patte de retenue 30 est adjacente à une rampe 23 de la queue.

La patte de retenue 30 est réalisée d'un seul tenant avec la queue 22, notamment par moulage.

La patte de retenue 30 est unique.

La queue comporte une rampe 23 située entre la patte de retenue 30 et la tête 21 lorsque le bouchon 20 et observé de coté.

La rampe 23 comporte un flanc 46 sensiblement hélicoïdal agencé pour permettre un montage notamment par quart de tour du bouchon dans une ouverture de la boite collectrice.

La rampe 23 du haut comporte un pion de verrouillage 49 en rotation agencé pour coopérer avec une butée 50 de la boite collectrice pour bloquer le bouchon 20 en rotation lorsqu'il est dans la position intermédiaire, comme illustré sur la figure 2 notamment.

Le pion de verrouillage 49 est tourné vers l'extrémité libre 24 du bouchon.

Le bouchon 20 comporte un joint 53 monté sous la tête 21.

La queue comporte une platine de maintien 54 agencée pour loger le joint 53 torique, entre cette platine et la tête.

La tête 21, la queue 22 et la platine 54 sont réalisées d'un seul tenant, notamment dans une matière plastique.

La tête 21 comporte une fente 59 agencée pour y insérer un tournevis pour faire tourner le bouchon.

La fente 59 présente une forme allongée.

La figure 4 montre, en coupe, le bouchon 2 complètement inséré dans l'ouverture 10, de manière étanche. La rampe 23 du haut se trouve alors en dessous des saillies radiales 11, pour blocage en translation selon l'axe X.

Le joint 53 assure l'étanchéité dans l'ouverture 10.

La figure 5 montre, en coupe, le bouchon 20 en position intermédiaire, à savoir translaté vers le haut par rapport à la figure 4. Dans cette position intermédiaire, le pion 49 peut bloquer le bouchon en rotation. Les saillies radiales 11 engagées entre des rampes 23 du bas et des rampes 23 du haut, avec appui de la patte de retenue 30 sur l'une des saillies 11 permet de retenir le bouchon selon la direction de l'axe X. du gaz peut sortir de la boite 2 par le passage 31, tout en maintenant le bouchon bien ancré dans l'ouverture 10.

L'échangeur peut comporter :
- une pluralité de tubes 3 dans lesquels peut circuler un fluide caloporteur,
- une pluralité d'ailettes 70 disposées entre les tubes 3, notamment en contact avec ces tubes, comme visible sur la figure 1.

Ainsi on constate que le bouchon 20 peut prendre une position intermédiaire qui laisse passer l'air et/ou de l'eau et/ou du gaz.

Dans cette position intermédiaire, le bouchon 20 peut tourner dans le vide et est maintenu lorsqu'on le desserre ce qui lui permet de ne pas s'échapper.

## Revendications

1. Bouchon (20) pour une boite collectrice d'un échangeur de chaleur (1), notamment pour véhicule automobile, notamment un radiateur, ce bouchon comportant :
- une tête (21),
- une queue (22) comprenant au moins une rampe de montage (23), cette queue étant entre la tête et une extrémité libre du bouchon,
- une patte de retenue (30), notamment élastiquement déformable, agencée pour retenir le bouchon dans une ouverture (10) de la boite collectrice dans une position intermédiaire du bouchon, position dans laquelle le bouchon laisse un passage tout en état retenu dans l'ouverture, cette patte de retenue étant formée sur la queue ;
**caractérisé en ce que** le bouchon comporte une rampe comportant un flanc (46) sensiblement hélicoïdal agencé pour permettre un montage notamment par quart de tour du bouchon dans une ouverture de la boite collectrice et **en ce que** la rampe comporte un pion (49) de verrouillage en rotation agencé pour coopérer avec une butée de la boite collectrice pour bloquer le bouchon en rotation lorsqu'il est dans la position intermédiaire.

2. Bouchon selon la revendication précédente, dans lequel la patte de retenue (30) est élastiquement déformable de manière à pouvoir prendre une position de retenue et une position dégagée permettant au bouchon d'être déplacé dans l'ouverture de la boite collectrice lors de la mise en place du bouchon.

3. Bouchon selon l'une des revendications précédentes, dans lequel le bouchon présente un axe longitudinal, et la patte de retenue comporte un flanc (40) de préférence incliné par rapport à cet axe longitudinal, notamment suivant un angle compris entre 30° et 60°, notamment d'environ 45°.

4. Bouchon selon la revendication précédente, dans lequel la patte comporte un rebord d'appui (41) agencé pour venir en appui contre une butée axiale de l'ouverture de la boite collectrice.

5. Bouchon selon la revendication précédente, dans lequel le rebord (41) se raccorde au flanc (40) suivant un angle notamment compris entre 90° et 180°, notamment entre 100° et 160°.

6. Bouchon selon la revendication 4 ou 5, dans lequel la patte de retenue se raccorde à une base, notamment de forme en arc de cercle, de la queue.

7. Bouchon selon l'une des revendications précédentes, dans lequel la tête comporte une fente (59) agencée pour y insérer un tournevis pour faire tourner le bouchon.

8. Echangeur de chaleur (1) comportant une boite collectrice pourvue d'une ouverture, et un bouchon selon l'une des revendications précédentes, le bouchon étant monté dans l'ouverture.

## Patentansprüche

1. Stopfen (20) für ein Sammelgehäuse eines Wärmetauschers (1), insbesondere für ein Kraftfahrzeug, insbesondere einen Kühler, wobei dieser Stopfen Folgendes aufweist:
- einen Kopf (21),
- einen Schaft (22), der mindestens eine Montagerampe (23) umfasst, wobei dieser Schaft zwischen dem Kopf und einem freien Ende des Stopfens liegt,
- eine insbesondere elastisch deformierbare Haltelasche (30), die dazu angeordnet ist, den Stopfen in einer Öffnung (10) des Sammelgehäuses in einer Zwischenposition des Stopfens zu halten, wobei der Stopfen in dieser Position, während er in einem gehaltenen Zustand in der Öffnung ist, einen Durchgang belässt, wobei diese Haltelasche an dem Schaft ausgebildet ist,
**dadurch gekennzeichnet, dass** der Stopfen eine Rampe aufweist, die eine im Wesentlichen spiralige Flanke (46) aufweist, die dazu angeordnet ist, eine Montage des Stopfens insbesondere durch eine Vierteldrehung in einer Öffnung des Sammelgehäuses zu gestatten, und dass die Rampe einen Drehverriegelungszapfen (49) aufweist, der dazu angeordnet ist, mit einem Anschlag des Sammelgehäuses zusammenzuwirken, um den Stopfen gegen eine Drehung zu sichern, wenn er sich in der Zwischenposition befindet.

2. Stopfen nach dem vorhergehenden Anspruch, wobei die Haltelasche (30) so elastisch deformierbar ist, dass sie eine Halteposition und eine ausgerückte Position einnehmen kann, die gestattet, dass der Stopfen in der Öffnung des Sammelgehäuses bewegt werden kann, wenn der Stopfen platziert wird.

3. Stopfen nach einem der vorhergehenden Ansprüche, wobei der Stopfen eine Längsachse aufweist und die Haltelasche eine vorzugsweise bezüglich dieser Längsachse insbesondere in einem Winkel zwischen 30° und 60°, insbesondere ungefähr 45°, geneigte Flanke (40) aufweist.

4. Stopfen nach dem vorhergehenden Anspruch, wobei die Lasche einen Stützrand (41) aufweist, der dazu angeordnet ist, an einem axialen Anschlag der Öffnung des Sammelgehäuses zur Anlage zu kommen.

5. Stopfen nach dem vorhergehenden Anspruch, wobei sich der Rand (41) in einem Winkel zwischen insbesondere 90° und 180°, insbesondere zwischen 100° und 160°, an die Flanke (40) anschließt.

6. Stopfen nach Anspruch 4 oder 5, wobei sich die Haltelasche an eine insbesondere kreisbogenförmige Basis des Schafts anschließt.

7. Stopfen nach einem der vorhergehenden Ansprüche, wobei der Kopf einen Spalt (59) aufweist, der dazu angeordnet ist, dass ein Schraubendreher darin eingeführt wird, um den Stopfen zu drehen.

8. Wärmetauscher (1), aufweisend ein mit einer Öffnung versehenes Sammelgehäuse und einen Stopfen nach einem der vorhergehenden Ansprüche, wobei der Stopfen in der Öffnung montiert ist.

## Claims

1. Cap (20) for a header box of a heat exchanger (1), in particular for a motor vehicle, in particular a radiator, this cap comprising:
- a head (21),
- a tail (22) comprising at least one mounting ramp (23), this tail being between the head and a free end of the cap,
- a retention tab (30), in particular one that is elastically deformable, arranged to retain the cap in an opening (10) of the header box in an intermediate position of the cap, in which position the cap leaves a passage while being retained in the opening, this retention tab being formed on the tail;
**characterized in that** the cap comprises a ramp comprising a substantially helical flank (46) that is arranged to allow the cap to be mounted - in particular by a quarter-turn - in an opening of the header box, and **in that** the ramp comprises a rotational locking peg (49) that is arranged so as to cooperate with a stop of the header box in order to prevent the cap from rotating when it is in the intermediate position.

2. Cap according to the preceding claim, wherein the retention tab (30) is elastically deformable so as to be able to adopt a retention position and a released position, allowing the cap to be moved in the opening of the header box when the cap is put in place.

3. Cap according to one of the preceding claims, wherein the cap has a longitudinal axis, and the retention tab comprises a flank (40) that is preferably inclined relative to this longitudinal axis, in particular at an angle of between 30° and 60°, in particular approximately 45°.

4. Cap according to the preceding claim, wherein the tab comprises a bearing rim (41) arranged so as to press against an axial stop of the opening of the header box.

5. Cap according to the preceding claim, wherein the rim (41) connects to the flank (40) at an angle in particular between 90° and 180°, in particular between 100° and 160°.

6. Cap according to Claim 4 or 5, wherein the retention tab connects to a base, in particular in the form of an arc of a circle, of the tail.

7. Cap according to one of the preceding claims, wherein the head comprises a slot (59) that is arranged so as to receive a screwdriver for the purpose of turning the cap.

8. Heat exchanger (1) comprising a header box provided with an opening, and a cap according to one of the preceding claims, the cap being mounted in the opening.
